(19) Europäisches Patentamt / European Patent Office / Office européen des brevets

(11) **EP 3 155 047 B1**

(12) **EUROPEAN PATENT SPECIFICATION**

(45) Date of publication and mention of the grant of the patent:
**01.07.2020 Bulletin 2020/27**

(51) Int Cl.:
**C08L 23/08** (2006.01)     **C08L 91/00** (2006.01)

(21) Application number: **15729687.2**

(22) Date of filing: **02.06.2015**

(86) International application number:
**PCT/US2015/033744**

(87) International publication number:
**WO 2015/195322 (23.12.2015 Gazette 2015/51)**

(54) **ACRYLIC COMPOSITION WITH OLEFIN BLOCK COPOLYMER**

ACRYLZUSAMMENSETZUNG MIT OLEFINBLOCKCOPOLYMER

COMPOSITION ACRYLIQUE AYANT UN COPOLYMÈRE SÉQUENCÉ D'OLÉFINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.06.2014 US 201462012475 P**

(43) Date of publication of application:
**19.04.2017 Bulletin 2017/16**

(73) Proprietors:
• **Dow Global Technologies LLC**
  **Midland, MI 48674 (US)**
• **Rohm and Haas Company**
  **Philadelphia, PA 19106 (US)**

(72) Inventors:
• **MUNRO, Jeffrey C.**
  **Bellaire, TX 77401 (US)**
• **LAFLEUR, Edward E.**
  **Holland, PA 18966 (US)**

(74) Representative: **Boult Wade Tennant LLP**
**Salisbury Square House**
**8 Salisbury Square**
**London EC4Y 8AP (GB)**

(56) References cited:
**EP-A1- 2 368 952       WO-A1-2014/039490**
**US-A1- 2011 306 715**

**Description**

<u>Field</u>

Embodiments relate to an acrylic composition that includes olefin block copolymers.

<u>Background</u>

Acrylic based compositions have applications such as a coating member/film (e.g., for the body of the car, exterior car body parts, internal car body parts, hand held tools, sporting equipment, water resistance and/or repellant apparel, and winter apparel). A need exists for acrylic based compositions with low, or no, tack (e.g., even when exposed to elevated temperature for an extended period of time). Further, olefin block copolymers (OBCs) are useful for producing soft compounds such as soft-touch articles, e.g., as discussed in WO Publication No. 2011/159649. Accordingly, an acrylic based composition that includes OBCs is proposed.

<u>Summary</u>

Embodiments relate to an acrylic composition that includes a first component that accounts for 20 wt% to 40 wt% of the total weight of the acrylic composition and the first component includes an olefin block copolymer comprising hard segments and soft segments, of which the soft segments have from 9 mol % to less than 15 mol % of comonomer content. A second component of the acrylic composition accounts for at least 25 wt% of the total weight of the acrylic composition and the second component includes at least one oil and at least one polyolefin. A third component of the acrylic composition accounts for at least 15 wt% of the total weight of the acrylic composition and the third component includes acrylic particles having an average particle size from 0.5 $\mu$m to 30 $\mu$m and at least one inorganic filler. The acrylic particles account for at least 10 wt% of the total weight of the third component.

<u>Detailed Description</u>

Embodiments relate to an acrylic based composition that includes both acrylic particles and olefin block copolymers (OBCs). OBCs find application in soft compounds because the block architecture of the OBC may result in, e.g., good tensile strength, compression set, and/or temperature resistance. To make soft compositions (e.g., compositions with a low durometer value and/or a low Shore A hardness value), the acrylic particles and OBCs are mixed with an oil. When exposed to elevated temperature; however, these compositions can exhibit tackiness. An "acrylic composition," as used herein, is a composition that includes at least (i) OBC, (ii) oil, and (iii) acrylic particles. The acrylic based composition further includes at least one polyolefin and at least one inorganic filler (that is different from the acrylic particles). In particular, the acrylic composition includes a first component that includes at least OBC, a second component that includes at least an oil and a polyolefin, and a third component that includes at least the acrylic particles and the inorganic filler.

The first component may be pre-mixed with the second component in part or its entirety, pre-mixed with the third component in part or its entirety, and/or mixed together with the second and third components. The second component may be pre-mixed or mixed together with at least one of the first and third components. The third component may be pre-mixed or mixed together with at least one of the first and second components.

The first component includes at least the OBC, e.g., OBC in pelletized form. The second component comprises at least one oil and at least one polyolefin. The second component may include a liquid component (such as the oil) and a solid component (such as the polyolefin). If appropriate, further additives, such as stabilizers in liquid form may be included in the second component. The third component includes the acrylic based polymer particles having an average particle size from 0.5 $\mu$m to 30 $\mu$m and at least one inorganic filler that is distinguishable from acrylic particles. Third component may include only solid components. If appropriate, additives, such as, pigments, dyestuffs, and/or other additives known to one of ordinary skill in the art (e.g., for use in soft articles) may be included in the third component. According to embodiments, additives such as process aids, UV stabilizers, antioxidants, color master batches, pigments, catalyst, flame retardants, and/or other additives known to one of ordinary skill in the art may be independently included in the second component and/or the third component.

The first, second, and third components may be melt blended in an extruder to form a final compound in pellet form. The pelletized product may be formed into an article by standard methods such as injection molding or extrusion.

**Olefin Block Copolymer**

The first component includes an olefin block copolymer, which is formed of a monomer and a comonomer. The first component may also include a first polymer that is the same composition of the monomer and a second polymer that is the same composition of the comonomer. The term "olefin block copolymer" or "OBC" is an ethylene/a-olefin multi-block copolymer and includes ethylene and one or more copolymerizable α-olefin comonomer in polymerized form, characterized by multiple blocks or segments of two or more polymerized monomer units differing in chemical or physical properties. The terms "interpolymer" and "copolymer" are used interchangeably herein. In some embodiments, the multi-block copolymer can be represented by the following formula:

$$(AB)_n$$

where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, As and Bs are linked in a substantially linear fashion, as opposed to a substantially branched or substantially star-shaped fashion. In other embodiments, A blocks and B blocks are randomly distributed along the polymer chain. In other words, the block copolymers usually do not have a structure as follows.

AAA-AA-BBB-BB

In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more subsegments (or sub-blocks) of distinct composition, such as a tip segment, which has a substantially different composition than the rest of the block.

The olefin block copolymer includes various amounts of "hard" and "soft" segments. "Hard" segments are blocks of polymerized units in which ethylene is present in an amount greater than 95 weight percent (wt%), or greater than 98 wt% based on the weight of the polymer. In other words, the comonomer content (content of monomers other than ethylene) in the hard segments is less than 5 wt%, or less than 2 wt% based on the weight of the polymer. In some embodiments, the hard segments include all, or substantially all, units derived from ethylene. "Soft" segments are blocks of polymerized units in which the comonomer content (content of monomers other than ethylene) is greater than 5 wt%, or greater than 8 wt%, greater than 10 wt%, or greater than 15 wt% based on the weight of the polymer. In some embodiments, the comonomer content in the soft segments can be greater than 20 wt%, greater than 25 wt%, greater than 30 wt%, greater than 35 wt%, greater than 40 wt%, greater than 45 wt%, greater than 50 wt%, or greater than 60 wt%.

The soft segments can be present in an OBC from 1 wt%, to 99 wt%, of the total weight of the OBC. For example, the soft segments may be present in an amount from 5 wt% to 95 wt%, from 10 wt%, to 90 wt%, from 15 wt% to 85 wt%, from 20 wt% to 80 wt%, from 25 wt% to 75 wt%, from 30 wt% to 70 wt%, from 35 wt% to 65 wt%, from 40 wt% to 60 wt%, or from 45 wt% to 55 wt%, based on the total weight of the OBC. Conversely, the hard segments can be present in similar ranges. The soft segment weight percentage and the hard segment weight percentage can be calculated based on data obtained from DSC or NMR. Such methods and calculations are disclosed in, for example, U.S. Patent No. 7,608,668, entitled "Ethylene/α-Olefin Block Inter-polymers," filed on March 15, 2006, in the name of Colin L. P. Shan, Lonnie Hazlitt, et. al. and assigned to Dow Global Technologies Inc., the disclosure of which is incorporated by reference herein in its entirety. In particular, hard and soft segment weight percentages and comonomer content may be determined as described in Column 57 to Column 63 of US Patent No. 7,608,668.

The term "crystalline" if employed, refers to a polymer that possesses a first order transition or crystalline melting point (Tm) as determined by differential scanning calorimetry (DSC) or equivalent technique. The term may be used interchangeably with the term "semicrystalline". The term "amorphous" refers to a polymer lacking a crystalline melting point as determined by differential scanning calorimetric (DSC) or equivalent technique.

The term "multi-block copolymer" or "segmented copolymer" is a polymer comprising two or more chemically distinct regions or segments (referred to as "blocks"), preferably joined in a linear manner, that is, a polymer comprising chemically differentiated units that are joined end-to-end with respect to polymerized ethylenic functionality, rather than in pendent or grafted fashion.

In an embodiment, the blocks differ in the amount or type of incorporated comonomer, density, amount of crystallinity, crystallite size attributable to a polymer of such composition, type or degree of tacticity (isotactic or syndiotactic), region-regularity or regio-irregularity, amount of branching (including long chain branching or hyper-branching), homogeneity or any other chemical or physical property. Compared to block interpolymers of the prior art, including interpolymers produced by sequential monomer addition, fluxional catalysts, or anionic polymerization techniques, the present OBC is characterized by unique distributions of both polymer polydispersity (PDI, Mw/Mn, or MWD), block length distribution, and/or block number distribution, due, in an embodiment, to the effect of the shuttling agent(s) in combination with multiple catalysts used in their preparation.

In an embodiment, the OBC is produced in a continuous process and possesses a polydispersity index, PDI, from 1.7 to 3.5. For example, from 1.8 to 3, from 1.8 to 2.5, or from 1.8 to 2.2. When produced in a batch or semi-batch process, the OBC possesses PDI from 1.0 to 3.5, or from 1.3 to 3, or from 1.4 to 2.5, or from 1.4 to 2.

In addition, the olefin block copolymer possesses a PDI fitting a Schultz-Flory distribution rather than a Poisson distribution. The present OBC has both a polydisperse block distribution as well as a polydisperse distribution of block sizes. This results in the formation of polymer products having improved and distinguishable physical properties. The theoretical benefits of a polydisperse block distribution have been previously modeled and discussed in Potemkin, Physical Review E (1998) 57 (6), pp. 6902-6912, and Dobrynin, J. Chem.Phvs. (1997) 107 (21), pp 9234-9238.

In an embodiment, the present olefin block copolymer possesses a most probable distribution of block lengths. In an embodiment, the olefin block copolymer is defined as having at least one of the following:

(A) Mw/Mn from 1.7 to 3.5, at least one melting point, Tm, in degrees Celsius, and a density, d, in grams/cubic centimeter, where in the numerical values of Tm and d correspond to the relationship:

$$Tm > -2002.9 + 4538.5(d) - 2422.2(d)^2,$$

where d is from 0.850 g/cc, or 0.860, or 0.866 g/cc, or 0.87 g/cc, or 0.880 g/cc to 0.89 g/cc, or 0.91 g/cc, or 0.925 g/cc, and Tm is from 113°C, or 115°C, or 117°C, or 118°C to 120°C, or 121°C, or 125°C; and/or

(B) Mw/Mn from 1.7 to 3.5, and is characterized by a heat of fusion, $\Delta H$ in J/g, and a delta quantity, $\Delta T$, in degrees Celsius defined as the temperature difference between the tallest DSC peak and the tallest Crystallization Analysis Fractionation ("CRYSTAF") peak, wherein the numerical values of $\Delta T$ and $\Delta H$ have the following relationships:

$$\Delta T > -0.1299 \, \Delta H + 62.81$$

for $\Delta H$ greater than zero and up to 130 J/g

$$\Delta T \geq 48°C$$

for $\Delta H$ greater than 130 J/g
wherein the CRYSTAF peak is determined using at least 5 percent of the cumulative polymer, and if less than 5 percent of the polymer has an identifiable CRYSTAF peak, then the CRYSTAF temperature is 30°C; and/or

(C) elastic recovery, Re, in percent at 300 percent strain and 1 cycle measured with a compression-molded film of the ethylene/a-olefin interpolymer, and has a density, d, in grams/cubic centimeter, wherein the numerical values of Re and d satisfy the following relationship when ethylene/a-olefin interpolymer is substantially free of crosslinked phase:

$$Re > 1481 - 1629(d);$$

and/or
(D) has a molecular weight fraction which elutes between 40°C and 130°C, when fractionated using TREF, characterized in that the fraction has a molar comonomer content of at least 5 percent higher than that of a comparable random ethylene interpolymer fraction eluting between the same temperatures, wherein said comparable random ethylene interpolymer has the same comonomer(s) and has a melt index, density and molar comonomer content (based on the whole polymer) within 10 percent of that of the ethylene/$\alpha$-olefin interpolymer; and/or
(E) has a storage modulus at 25°C, G'(25°C), and a storage modulus at 100°C, G'(100°C), wherein the ratio of G'(25°C) to G'(100°C) is in the range of 1:1 to 9:1.
The olefin block copolymer may also (may optionally) have at least of the following:
(F) a molecular fraction, which elutes between 40°C and 130°C when fractionated using TREF, characterized in that the fraction has a block index of at least 0.5 and up to 1 and a molecular weight distribution, Mw/Mn, greater than 1.3; and/or
(G) average block index greater than zero and up to 1.0, and a molecular weight distribution, Mw/Mn, greater than 1.3.

It is understood that the olefin block copolymer may have one, some, all, or any combination of properties (A)-(G).
Exemplary monomers for use in preparing the present OBC include ethylene and one or more addition polymerizable monomers other than ethylene. Examples of comonomers include straight-chain or branched $\alpha$-olefins of 3 to 30 (e.g., 3 to 20), carbon atoms, such as propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene and 1-eicosene; cyclo-olefins of 3 to 30 (e.g., 3 to 20), carbon atoms, such as cyclopentene, cycloheptene, norbornene, 5-methyl-2-norbornene, tetracyclododecene, and 2-methyl-1,4,5,8-dimethano-1,2,3,4,4a,5,8,8a-octahydronaphthalene; di-and polyolefins, such as butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidenenorbornene, vinyl norbornene, dicyclopentadiene, 7-methyl-1,6-octadiene, 4-ethylidene-8-methyl-1,7-nonadiene, and 5,9-dimethyl-1,4,8-decatriene; and 3-phenylpropene, 4-phenylpropene, 1,2-difluoroethylene, tetrafluoroethylene, and 3,3,3-trifluoro-1-propene.

For example, the olefin block copolymer may comprise an ethylene/octene multi-block copolymer comprising from 5 wt % to 30 wt % (e.g., 7 wt% to 20 wt%, etc.) hard segments and from 70 wt % to 95 wt % (e.g., 80 wt% to 95 wt%, etc.) soft segments. The hard segments may include from 90 mol% to 100 mol% of ethylene. The soft segments may include 9 mol% to less than 15 mol% octene (e.g., 9 mol% to 14.9 mol%). The olefin block copolymer may have a total octene content of from 3 mol% to 25 mol% (e.g., from 5 mol% to 20 mol%, and/or from 10 mol% to 15 mol%).

In an embodiment, the OBC has a density of less than or equal to 0.90 g/cc, or less than 0.89 g/cc. Such low density OBCs are generally characterized as amorphous, flexible and having good optical properties, e.g., high transmission of visible and UV-light and low haze. In an embodiment, the olefin block copolymer has a density from 0.85 g/cc to 0.89 g/cc, from 0.86 g/cc to 0.88 g/cc, or from 0.870 g/cc to 0.879 g/cc.

In an embodiment, the olefin block copolymer has a melt index (MI) from 0.1 g/10 min to 30 g/10, from 0.1 g/10 min to 10 g/10 min, from 0.1 g/10 min to 1.0 g/10 min, from 0.1 g/10 min to 0.5 g/10 min, or from 0.3 g/10 min to 0.6 g/10 min, as measured by ASTM D 1238 (190°C/2.16 kg).

The olefin block copolymer has a 2% secant modulus greater than zero and less than 150, or less than 140, or less than 120, or less than 100, MPa as measured by the procedure of ASTM D 882-02.

The present OBC has a melting point of less than 125°C. The melting point is measured by the differential scanning calorimetry (DSC) method described in WO 2005/090427 (US2006/0199930), the entire content of which is incorporated by reference herein.

In an embodiment, the olefin block copolymer contains from 5 wt% to 30 wt%, from 10 wt% to 25 wt%, or from 11 wt% to 20 wt% of a hard segment. The hard segment contains from 0.0 mol% to less than 0.9 mol% units derived from comonomer. The olefin block copolymer also contains from 70 wt% to 95 wt%, from 75 wt% to 90 wt%, or from 80 wt% to 89 wt% of a soft segment. The soft segment contains less than 15 mol%, or from 9 mol% to 14.9 mol% units derived from comonomer. In an embodiment, the comonomer is butene or octene.

It is believed that the provision of a soft segment comonomer content in the range of less than 15 mol%, or from 9 mol% to 14.9 mol%, unexpectedly produces a polymeric composition with no, or substantially no, tackiness or stickiness. For example, it has been found that olefin block copolymer with 18 mol% or greater comonomer content in the soft segment develops tackiness after aging at 50°C or higher. It is believed that lowering the soft segment comonomer content to less than 15 mol%, or from 9 mol% to 14.9 mol%, increases soft segment crystallinity may reduce stickiness or tackiness of fabricated articles.

In an embodiment, the acrylic composition includes from 20 wt% to 40 wt% OBC (e.g., 25 wt% to 35 wt% OBC, 25 wt% to 30 wt% OBC, etc.), based on total weight of the oil extended composition. The OBC may be an ethylene/octene multi-block copolymer with from 5 wt% to 30 wt% hard segment and from 70 wt% to 95 wt% soft segment, based on total weight of the olefin block copolymer. The soft segment contains from 9 mol% to 14.9 mol% units derived from octene. The OBC has an overall octene content of 6.0 mol% to 14.2 mol%.

In some embodiments, the OBC is present in an amount of 10 phr to 90 phr (parts per hundred), or in an amount of 30 phr to 70 phr, or in an amount of 40 phr to 60 phr, based on total elastomer being 100 phr.

## Oil

The acrylic composition includes at least one oil (as part of the second component). The oil can be an aromatic oil, a mineral oil, a napththenic oil, a paraffinic oil, a triglyceride-based vegetable oil such as castor oil, a synthetic hydrocarbon oil such as polypropylene oil, a silicone oil, or any combination thereof. A nonlimiting example of an oil is a white mineral oil sold under the tradename HYDROBRITE® 550.

The acrylic composition includes from at least 25 wt% (e.g., 30 wt% to 60 wt%, 35 wt% to 50 wt%, etc.) of the second component, which second component includes at least one oil and at least one polyolefin. The at least one oil may be the primary component in the second component, e.g., a mineral oil may be the primary component in the second component. Of the second component, the total oil (such as a mineral oil) may account for at least 50 wt%, at least 60 wt%, at least 70 wt%, and/or at least 72 wt% of the total weight of the second component. For example, the oil may account for 65 wt% to 95 wt% of the total weight of the second component. The acrylic composition may include from 20 wt% to 60 wt% oil (e.g., 30 wt% to 50 wt% oil, 30 wt% to 45 wt% oil, 30 wt% to 40 wt%, etc.), based on the total weight of the acrylic composition.

## Polyolefin

The acrylic composition includes at least one polyolefin. The polyolefin may be a different OBC, a polyethylene (or ethylene-based polymer), a polypropylene (or propylene-based polymer), an EPDM, or any combination thereof. As used herein, polyolefin and polyolefin polymer refers to, in polymerized form, a majority amount of olefin monomer (e.g., ethylene or propylene), based on the weight of the polymer, and optionally may include one or more comonomers.

In an embodiment, the polyolefin is a polyethylene (or ethylene-based polymer), which as used herein, refers to a polymer that comprises, in polymerized form, a majority amount of ethylene monomer (based on the weight of the polymer), and optionally may comprise one or more comonomers. The ethylene-based polymer may be (i) a Ziegler-Natta catalyzed ethylene copolymer comprising repeating units derived from ethylene and one or more $\alpha$-olefins having from 3 to 10 carbon atoms; (ii) a metallocene-catalyzed ethylene copolymer comprising repeating units derived from ethylene and one or more $\alpha$-olefins having from 3 to 10 carbon atoms; (iii) a Ziegler-Natta-catalyzed ethylene homopolymer; (iv) a metallocene-catalyzed ethylene homopolymer; and combinations thereof. The polyethylene may be selected from ultralow density polyethylene (ULDPE), low density polyethylene (LDPE), linear low density polyethylene (LLDPE), medium density polyethylene (MDPE), high density polyethylene (HDPE), high melt strength high density polyethylene (HMS-HDPE), ultrahigh density polyethylene (UHDPE), and combinations thereof. In a further embodiment, the polyethylene has a density greater than 0.950 g/cc (i.e., a HDPE).

In an embodiment, the polyolefin is a polypropylene (or propylene-based polymer), which as used herein, refers to a polymer that comprises, in polymerized form, a majority amount of propylene monomer (based on the weight of the polymer), and optionally may comprise one or more comonomers. The propylene-based polymer may be (i) a Ziegler-Natta catalyzed propylene copolymer comprising repeating units derived from propylene and one or more $\alpha$-olefins having from 2 (ethylene is considered an $\alpha$-olefin for purposes of this disclosure) or from 4 to 10 carbon atoms; (ii) a metallocene-catalyzed propylene copolymer comprising repeating units derived from propylene and one or more $\alpha$-olefins having 2 or from 4 to 10 carbon atoms; (iii) a Ziegler-Natta-catalyzed propylene homopolymer; (iv) a metallocene-catalyzed propylene homopolymer; and combinations thereof. The polypropylene is selected from random copolymer polypropylene (rcPP), impact copolymer polypropylene (hPP + at least one elastomeric impact modifier) (ICPP) or high impact polypropylene (HIPP), high melt strength polypropylene (HMS-PP), isotactic polypropylene (iPP), syndiotactic polypropylene (sPP), and combinations thereof. In an exemplary embodiment, the polyolefin is an ethylene-propylene-diene monomer rubber (EPDM). EPDM materials are linear interpolymers of ethylene, propylene, and a nonconjugated diene such as 1,4-hexadiene, dicyclopentadiene, or ethylidene norbornene. The acrylic composition may include any combination of an OBC, a polyethylene (such as a high density polyethylene), and EPDM.

In an embodiment, the olefin-based polymer is an ethylene/a-olefin copolymer, which as used herein, refers to a copolymer that comprises, in polymerized form, a majority amount of ethylene monomer (based on the weight of the copolymer), and an $\alpha$-olefin, as the only two monomer types. The ethylene/$\alpha$-olefin copolymer can include ethylene and one or more $C_3$-$C_{20}$ $\alpha$-olefin comonomers. The comonomer(s) can be linear or branched. Nonlimiting examples of comonomers include propylene, 1-butene, 1-pentene, 4-methyl-1-pentene, 1-hexene, and 1-octene. The ethylene/$\alpha$-olefin copolymer can be prepared with either Ziegler-Natta, chromium-based, constrained geometry or metallocene catalysts in slurry reactors, gas phase reactors or solution reactors. The ethylene/$\alpha$-olefin copolymer is a random copolymer and is distinct from the OBC which has a block intra-molecular architecture. The ethylene/$\alpha$-olefin copolymer may be a high density ethylene/$\alpha$-olefin copolymer having a density range with a lower limit from 0.94 g/cc, or greater than 0.94 g/cc, or 0.95 g/cc to an upper limit of 0.96 g/cc, or 0.970 g/cc. In a further embodiment, the high density ethylene/$\alpha$-olefin copolymer may have a melt index from 0.5 g/10 min to 10.0 g/10 min.

The acrylic composition includes from at least 25 wt% (e.g., 30 wt% to 60 wt%, 35 wt% to 50 wt%, etc.) of the second component, which second component includes at least one polyolefin and the at least one oil discussed above. The at least one oil may be the primary component and the at least one polyolefin may be a minor component present in lesser amounts than the total oil in the second component. Of the second component, the total amount of polyolefin (such as high density polyethylene) may account for less than 50 wt%, less than 40 wt%, less than 30 wt%, less than 20 wt%, and/or at least 10 wt% of the total weight of the second component. For example, the total amount of polyolefin may account for 5 wt% to 35 wt% (e.g., 9 wt% to 32 wt%, 10 wt% to 30 wt%, 15 wt% to 25 wt%, etc.) of the total weight of the second component. The acrylic composition may include from 4 wt% to 25 wt% polyolefin (e.g., from 4 wt% to 15 wt% polyolefin), based on the total weight of the acrylic composition.

## Acrylic Particles

The third component includes an acrylic particle composition that includes acrylic particles (e.g., crosslinked acrylic copolymer particles). The third component that accounts for at least 15 wt% of the total weight of the acrylic composition, of which the acrylic particles account for at least 10 wt% (e.g., from 10 wt% to 90 wt%, from 10 wt% to 80 wt%, from 10 wt% to 65 wt%, from 10 wt% to 50 wt%, from 10 wt% to 45 wt%, from 10 wt% to 40 wt%, from 10 wt% to 35 wt%, from 10 wt% to 30 wt%, from 15 wt% to 30 wt%, etc.) of the total weight of the third component. The acrylic resin may be a resin obtained by polymerizing an acryl-based monomer. For example, the acryl-based monomer, methyl acrylate, ethyl acrylate, propyl acrylate, butyl acrylate, 2-ethylhexyl acrylate, methyl methacrylate, ethyl methacrylate, propyl methacrylate, butyl methacrylate, 2-ethylhexyl methacrylate, and phenyl methacrylate, may be used alone or in admixture of two or more. The acrylic particles may be (meth)acrylate copolymer derived from one or more (meth)acrylate monomers and from one or more crosslinking monomers and/or graftlinking agents. For example, the acrylic particles may be styrene/acrylate copolymer particles.

Various acrylic particle compositions, e.g., as available under the tradename PARALOID™ from The Dow Chemical Company, may be included in the third component (e.g., the third component may consistent essentially of one acrylic particle compositions). The acrylic particle composition may include at least 80 wt% (e.g., at least 90 wt%, at least 95 wt%, and/or at least 98 wt%) of acrylic particles, based on the total weight of the acrylic particle composition. The average particle size of the acrylic particles may be from 0.5 $\mu$m to 30 $\mu$m (e.g., 0.5 $\mu$m to 20 $\mu$m, 1 $\mu$m to 15 $\mu$m, 3 $\mu$m to 10 $\mu$m, etc.). The acrylic particle composition may account for 3 wt% to 65 wt% (e.g., 3 wt% to 60 wt%, 3 wt% to 50 wt%, 3 wt% to 40 wt%, 3 wt% to 30 wt%, 4 wt% to 20 wt%, 4 wt% to 15 wt%, 4 wt% to 12 wt%, etc.) of the total weight of the acrylic composition. According to an exemplary embodiment, the amount of the acrylic particle composition (and the amount of acrylic particles) in the acrylic composition may be less than the amount of the filler.

The acrylic particle composition may allow for a decrease in at least one of the total amount of oil, total amount of polyolefin, and total amount of filler, to account for the addition of the acrylic particles. This addition of the acrylic particles results in an acrylic composition and/or final article with an improvement in at least one of Shore A hardness, tack, fingerprint, compression set, tensile strength, and elongation at break.

### Filler

The acrylic composition includes a filler (that is distinguishable from acrylic particles). Non-limiting examples of fillers include talc, calcium carbonate, chalk, calcium sulfate, clay, kaolin, silica, glass, fumed silica, mica, wollastonite, feldspar, aluminum silicate, calcium silicate, alumina, hydrated alumina such as alumina trihydrate, glass microsphere, ceramic microsphere, barite, glass fibers, marble dust, cement dust, magnesium oxide, magnesium hydroxide, antimony oxide, zinc oxide, barium sulfate, titanium dioxide, and titanates. In embodiments, the filler is an inorganic filler. In an exemplary embodiment, the filler is calcium carbonate.

The third component accounts for 15 wt% to 65 wt% of the total weight of the acrylic composition, of which the inorganic filler accounts for at less than or equal to 90 wt% (e.g., from 0.5 wt% to 90 wt%, from 5 wt% to 85 wt%, from 20 wt% to 85 wt%, 40 wt% to 80 wt%, 50 wt% to 75 wt%, etc.) of the total weight of the third component. In an exemplary embodiment, the filler may be present in a greater amount in the third component (and optionally in the acrylic composition also) than the acrylic particles (and/or the acrylic particle composition). In an embodiment, the acrylic composition contains from 5 wt% to 62 wt% (e.g., 10 wt% to 50 wt%, 10 wt% to 40 wt%, 15 wt% to 35 wt%, 20 wt% to 30 wt%, etc.) of the filler, based on the total weight of the acrylic composition.

### Composition Characteristics

The OBC, oil, polyolefin, acrylic particles and the filler are compounded to form the acrylic composition such as by way of, e.g., melt blending and/or extrusion blending. The acrylic composition may then be molded into desired structures such as plaques, films, and/or pellets. The pellets formed using the acrylic composition may have an average particle diameter from 0.4 mm to 10.0 mm (e.g., 0.5 mm to 8.0 mm, 1 mm to 5 mm, etc.)

The resultant compositional structure made using the acrylic composition (e.g., when in the form of pellets) may have a Shore A hardness that is from 20 to 90 (e.g., 45 to 90, 50 to 90, etc.) after exposure to 70°C for one week. In an exemplary embodiment, the acrylic composition includes from 20 wt% to 30 wt% OBC, from 30 wt% to 50 wt% oil, from 4 wt% to 20 wt% at least one polyolefin such as polyethylene, from 15 wt% to 30 wt% inorganic filler, and from 4 wt% to 11 wt% acrylic particles, based on the total weight of the acrylic composition. For example, the acrylic composition includes from 20 wt% to 30 wt% OBC, from 30 wt% to 45 wt% (e.g., 31 wt% to 42 wt%) oil, from 4 wt% to 15 wt% (e.g., 6 wt% to 14 wt%) at least one polyolefin such as a high density polyethylene, from 15 wt% to 30 wt% (e.g., 21 wt% to 27 wt%) inorganic filler, and from 4 wt% to 11 wt% (e.g.,5 wt% to 10 wt%) acrylic particles, based on the total weight of the acrylic composition.

The OBC is an ethylene/a-olefin multi-block copolymer with hard segments and soft segments. The soft segments contain from 9 mol% to less than 15 mol% comonomer content. It is believed (i) an OBC with a soft segment comonomer content in the range of less than 15 mol% (e.g., from 9 mol% to 14.9 mol%), (ii) a polyolefin in the present acrylic composition, and (iii) a filler unexpectedly produces an acrylic composition with no, or substantially no, tack or stickiness. In a further embodiment, the OBC is an ethylene/octene multi-block copolymer.

The term "tack," as used herein, is the ability of one material to adhere to another material. Tack is quantified in terms of tack force. The "tack force" is a measure of the minimum force (in Newtons) necessary for separating two materials in contact with each other. The measurement for tack force is described in detail in the following "test methods" section. The term "tack-free," as used herein, is a polymeric composition with a tack force of less than 0.07 N after exposure to 70°C for one week.

The resultant compositional structure may have a tack force less than 0.1N (e.g., less than 0.07N, less than 0.05N, less than 0.03N, less than 0.01N, etc.), after exposure to 70°C for one week. For example, present acrylic composition may have a tack force of 0.0 N to less than 0.1 N, after exposure to 70°C for one week (e.g., from 0.0 N or greater than 0.0 N to less than 0.07 N, from 0.0 N or greater than 0.0N to less than 0.04 N, from 0.0 N or greater than 0.0 N to less than 0.03 N, from 0.0 N or greater than 0.0N to less than 0.02 N, and/or from 0.0 N or greater than 0.0 N to less than 0.013 N.

The acrylic composition may show improvement with respect to a fingerprint test in which the appearance of fingerprints on the surface of injection molded plaques was determined by applying even, firm pressure with the thumb (as discussed below with respect to test methods). For example, no fingerprint may be visible (after sitting at room temperature for at least one of 1 day and 7 days and/or after heat aging at 70 °C for at least one of 1 day and 7 days) on the molded plaque formed using the acrylic composition according to embodiments. For example, no fingerprint is visible on the molded article after heat ageing at 70 °C for 7 days (e.g., both 1 day and 7 days), according to the fingerprint test described below. No fingerprint is visible on the molder article after ageing at room temperature (approximately at 23 °C) for 7 days (e.g.. both 1 day and 7 days).

Tensile strength may be improved when using the acrylic composition according to embodiments. For example, the tensile strength may be greater than 550 psi (e.g., 655 psi to 1000 psi, etc.) Elongation at break may be improved when using the acrylic composition according to embodiments. For example, the elongation at break may be greater than 1000%.

The OBC may be modified by such processes as e-beam or peroxide treatment in order to alter the rheology of the polymer. E-beaming and peroxide are provided as examples only and are not meant to be limiting. These treatments result in both chain scission and cross-linking events. When these events are properly balanced, for example, by controlling the e-beam dose, the rheology ratio of the OBC can be increased without a significant decrease in the molecular weight of the polymer.

In an embodiment, the acrylic composition is halogen-free. In an embodiment, the acrylic composition is phthalate-free.

Any of the foregoing acrylic compositions can be made into an article or be made into a component of an article. Non-limiting examples of articles include durable articles for the automotive, construction, medical, food and beverage, electrical, appliance, business machine, and consumer applications. In some embodiments, the compositions are used to manufacture flexible durable parts or articles selected from toys, grips, soft touch handles, bumper rub strips, floorings, auto floor mats, wheels, casters, furniture and appliance feet, tags, seals, gaskets such as static and dynamic gaskets, automotive doors, bumper fascia, grill components, rocker panels, hoses, linings, office supplies, seals, liners, diaphragms, tubes, lids, stoppers, plunger tips, delivery systems, kitchen wares, shoes, shoe bladders and shoe soles. In some embodiments, the compositions are used to manufacture durable parts or articles that require a high tensile strength and low compression set. In further embodiments, the compositions are used to manufacture durable parts or articles that require a high upper service temperature and a low modulus.

Any of the foregoing acrylic compositions may comprise two or more embodiments disclosed herein.

## Definitions

All references to the Periodic Table of the Elements herein shall refer to the Periodic Table of the Elements, published and copyrighted by CRC Press, Inc., 2003. Also, any references to a Group or Groups shall be to the Groups or Groups reflected in this Periodic Table of the Elements using the IUPAC system for numbering groups. Unless stated to the contrary, implicit from the context, or customary in the art, all parts and percents are based on weight. For purposes of United States patent practice, the contents of any patent, patent application, or publication referenced herein are hereby incorporated by reference in their entirety (or the equivalent US version thereof is so incorporated by reference), especially with respect to the disclosure of synthetic techniques, definitions (to the extent not inconsistent with any definitions provided herein) and general knowledge in the art.

Any numerical range recited herein, includes all values from the lower value to the upper value, in increments of one unit, provided that there is a separation of at least 2 units between any lower value and any higher value. As an example, if it is stated that the amount of a component, or a value of a compositional or a physical property, such as, for example, amount of a blend component, softening temperature, melt index, etc., is between 1 and 100, it is intended that all individual values, such as, 1, 2, 3, etc., and all sub-ranges, such as, 1 to 20, 55 to 70, 97 to 100, etc., are expressly enumerated in this specification. For values which are less than one, one unit is considered to be 0.0001, 0.001, 0.01 or 0.1, as appropriate. These are only examples of what is specifically intended, and all possible combinations of numerical values between the lowest value and the highest value enumerated, are to be considered to be expressly stated in this application. In other words, any numerical range recited herein includes any value or subrange within the stated range. Numerical ranges have been recited, as discussed herein, reference melt index, melt flow rate, and other properties.

The terms "blend" or "polymer blend," as used herein, is a blend of two or more polymers. Such a blend may or may not be miscible (not phase separated at molecular level). Such a blend may or may not be phase separated. Such a blend may or may not contain one or more domain configurations, as determined from transmission electron spectroscopy, light scattering, x-ray scattering, and other methods known in the art.

The term "composition," as used herein, includes a mixture of materials which comprise the composition, as well as reaction products and decomposition products formed from the materials of the composition.

The term "comprising," and derivatives thereof, is not intended to exclude the presence of any additional component, step or procedure, whether or not the same is disclosed herein. In order to avoid any doubt, all compositions claimed herein through use of the term "comprising" may include any additional additive, adjuvant, or compound whether polymeric or otherwise, unless stated to the contrary. In contrast, the term, "consisting essentially of' excludes from the scope of any succeeding recitation any other component, step or procedure, excepting those that are not essential to operability. The term "consisting of' excludes any component, step or procedure not specifically delineated or listed. The term "or", unless stated otherwise, refers to the listed members individually as well as in any combination.

The term "polymer" is a macromolecular compound prepared by polymerizing monomers of the same or different type. "Polymer" includes homopolymers, copolymers, terpolymers, interpolymers, and so on. The term "interpolymer" means a polymer prepared by the polymerization of at least two types of monomers or comonomers. It includes, but is not limited to, copolymers (which usually refers to polymers prepared from two different types of monomers or comonomers, terpolymers (which usually refers to polymers prepared from three different types of monomers or comonomers), tetrapolymers (which usually refers to polymers prepared from four different types of monomers or comonomers), and the like.

The use of the term average herein relates to mean average, unless indicated otherwise.

## Test Methods

Compression set is measured according to ASTM D 395. The sample is prepared by stacking 25.4 mm diameter round discs of 3.2 mm, 2.0 mm, and 0.25 mm thickness until a total thickness of 12.7 mm is reached. The discs are cut from injection molded plaques that are 4" by 6" by 0.125". Compression set is measured after 24 hours at 25% strain at 70°C or 23 °C.

Density is measured in accordance with ASTM D 792.

Differential scanning calorimetry (DSC) is performed on compression molded specimens using a TA Instruments Q100 or Q1000 DSC and a crimp-sealed Perkin Elmer pan. Samples are equilibrated at -90°C for 5 min., then heated at 10°C/min. to 180°C (capturing the "1st Heat DSC Curve"), held for 5 min., then cooled at 10°C/min. to -90°C (capturing the "crystallization curve"), held for 5 minutes, then heated at 10°C/min. to 180°C (capturing the "2nd Heat DSC Curve"). The data is analyzed using TA Universal Analysis software after run completion.

Melt Index (MI) is measured in accordance with ASTM D 1238, Condition 190°C./2.16 kg.

Shore A hardness is measured on molded plaques in accordance with ASTM D 2240. This test method permits hardness measurements based on either initial indentation or indentation after a specified period of time, or both. In this case, a specified time of 10 seconds is used.

Tack Force is measured using the following described method. Samples are compression molded or injection molded into plaques with a thickness of 0.125 inches. Samples are cut into 1" x 6" strips and marked in 1" intervals. Samples are aged at elevated temperature if warranted. Mylar® sheets are cut into 1" x 6" strips, formed into loops with dimensions of 1" x 5". After aging, the samples are cooled to room temperature. Double-sided tape is used to affix the specimen to platform to prevent it from rising up off the surface. The loop is placed into the pneumatic grips of Instron™ 5564 and aligned parallel to the plaque. The loop is lowered at a rate of 300%/minute covering the 1" x 1" surface of the plaque. A new loop is used with each measurement taken. The Average Tack Force (N) and standard deviation are reported after five readings per specimen. One measurement is taken per each 1" x 1" portion of a sample.

Fingerprint is evaluated using the following described method. The appearance of fingerprints on the surface of injection molded plaques was determined by applying even, firm pressure with the thumb for 5 s to a plaque after sitting at room temperature for 1 day and 7 days or after heat aging at 70 °C for 1 day and 7 days. For oven-aged samples, the fingerprint test was conducted immediately upon removal of the sample from the oven. The appearance of a fingerprint was evaluated using the following scale: 1 = no visible fingerprint, 2 = marginally visible fingerprint, and 3 = clearly visible fingerprint.

Wet coefficient of friction (COF) values of the materials on stainless steel were measured using mirror-finish injection molded plaques according to ASTM D 1894. For each sample and test condition, 5 specimens (63.5 x 63.5 mm) were cut from the 4 x 6 x 0.125" injection molded plaques. Test specimens are attached to a metal sled (63.5 x 63.5 x 6 mm) and placed on top of a piece of stainless steel on a horizontal surface. The total weight of the sled and specimen is approximately 200 g. The force to drag the specimen across the stainless steel surface is recorded. The COF is the ratio of the force required to drag the specimen across the surface, to the normal force of the sled and specimen. COF measurements were made with samples wet with distilled water. All measurements were conducted under ambient conditions. Each specimen as dragged over at length of 125 mm at 6 in/min. Both static and kinetic COF were recorded. Static COF is calculated using the initial force required to initiate movement of the sample. Kinetic COF is calculated using the average force required to drag the sample across the surface over a length of 100 mm (from 25 to 125 mm).

Tensile properties (strength, modulus, and elongation-at-break) are measured according to ASTM D 1708. The sample is prepared by cutting microtensile specimens from injection molded plaques that are 4" by 6" by 0.125". The specimens are tested on a universal test machine such as an Instru-Met™ or Instron™ test frame.

Examples

By way of example and not by limitation, examples of the present disclosure will now be provided. The following materials are used in the examples:

*A. Olefin Block Copolymer*

INFUSE™ 9010: an olefin block copolymer having a melt index of 0.5 g/10 min, a density of 0.877 g/cc, 130 ppm of Zn, and 11/89 hard/soft segment split by weight percent, of which13 mol% octene in the soft segment and 11.2 mol% total octene (Olefin block copolymer is available from The Dow Chemical Company headquarters in Midland, MI).

The properties for INFUSE™ 9010 are shown in Table 1 below.

**Table 1**

| Property | Units | Method | INFUSE™ 9010 |
|---|---|---|---|
| Melt Index | dg/min | ASTM D 1238 | 0.5 |
| Density | g/cm$^3$ | ASTM D 792 | 0.877 |
| Melting Point | °C | DSC | 120 |
| Tg | °C | DSC | -54 |
| Hardness | Shore A | ASTM D 2240 | 76 |
| 100% Modulus | MPa | ASTM D 1708 | 2.8 |
| Ultimate Tensile Strength | MPa | ASTM D 1708 | 19.7 |
| Tensile Elongation | % | ASTM D 1708 | 975 |
| Compression Set, 23°C | % | ASTM D 395 | 23 |
| Compression Set, 70°C | % | ASTM D 395 | 60 |

*B. Oil*

HYDROBRITE® 550: a mineral oil having nominal 70 wt% paraffinic and 30 wt% naphthenic content, and an average molecular weight of 541 g/mole (available from Sonneborn).

*C. Polyolefin*

Dow DMDA.-8920 NT 7 (Dow HDPE 8920): a high density polyethylene resin having a density of 0.954 g/cc, a melt index of 20 g/10 min, and a melting point of 130°C (available from The Dow Chemical Company).

*D. Filler*

Calcium carbonate: Atomite® powdered solid (available from IMERYS Performance Minerals).

*E. Acrylic Particles*

PARALOID EXL-5136: a powdered solid including principally acrylic copolymer particles have an average size of within the range of approximately 5 μm to 10 μm (available from The Dow Chemical Company).

**Preparation of Examples**

The amounts, below, are given in weight percent based on the total weight of the respective compositions.

The approximate compositions of Working Examples 1 and 2 and Comparative Example A are provided in Table 2, below.

Table 2

| | Working Example 1 | Working Example 2 | Comparative Example A |
|---|---|---|---|
| **Components** | | | |
| OBC (wt%) | 27 | 26 | 28 |
| Oil (wt%) | 35 | 33 | 37 |
| Polyolefin (wt%) | 6 | 6 | 7 |
| Filler (wt%) | 27 | 25 | 28 |
| Acrylic Particles (wt%) | 5 | 10 | - |
| **Properties** | | | |
| Hardness (Shore A, 10s) | 50 | 49 | 46 |
| Tack (N) @ 70°C, 7 days | 0.070 | 0.051 | 0.213 |
| Fingerprint @ 23°C, 7 days | 1 | 1 | 3 |
| Fingerprint @ 70°C, 7 days | 1 | 1 | 3 |
| Tensile Strength (psi) | 772 | 689 | 605 |
| Elongation-at-break (%) | 1555 | 1439 | 1282 |
| Wet Static COF on stainless steel | Not measured | 0.99 | 0.79 |
| Wet Kinetic COF on stainless steel | Not measured | 0.98 | 0.82 |

The approximate compositions of Working Example 3 and Comparative Example B, which include relative higher amounts of the polyolefin (based on parts per resin through which weight percentage is calculated) compared to the samples in Table 2 (in particular, 55 phr vs. 25 phr), are provided in Table 3, below.

Table 3

| | Working Example 3 | Comparative Example B |
|---|---|---|
| **Components** | | |
| OBC (wt%) | 23 | 26 |
| Oil (wt%) | 31 | 34 |
| Polyolefin (wt%) | 14 | 14 |
| Filler (wt%) | 23 | 26 |
| Acrylic Particles (wt%) | 9 | -- |
| **Properties** | | |
| Hardness (Shore A, 10s) | 65 | 49 |
| Tack (N) @ 70°C, 7 days | 0.006 | 0.164 |
| Fingerprint @ 23°C, 7 days | 1 | 3 |

(continued)

| Properties | | |
|---|---|---|
| Fingerprint @ 70°C, 7 days | 1 | 3 |
| Tensile Strength (psi) | 846 | 891 |
| Elongation-at-break (%) | 1351 | 1054 |

The approximate compositions of Working Example 4 and Comparative Example C, which include higher amounts of the oil (based on parts per hundred) as compared to the samples in Table 2 (in particular, 160 phr vs. 130 phr), are provided in Table 4, below.

**Table 4**

| | Working Example 4 | Comparative Example C |
|---|---|---|
| **Components** | | |
| OBC (wt%) | 22 | 26 |
| Oil (wt%) | 35 | 42 |
| Polyolefin (wt%) | 12 | 6 |
| Filler (wt%) | 22 | 26 |
| Acrylic Particles (wt%) | 9 | -- |
| **Properties** | | |
| Hardness (Shore A, 10s) | 56 | 38 |
| Tack (N) @ 70°C, 7 davs | 0.019 | 0.435 |
| Fingerprint @ 23°C, 7 days | 1 | 3 |
| Fingerprint @ 70°C, 7 days | 1 | 3 |
| Tensile Strength (psi) | 566 | 556 |
| Elongation-at-break (%) | 1119 | 1409 |

The approximate compositions of Working Examples 5 and 6 and Comparative Example D, which include higher amounts of the oil (based on parts per resin) as compared to the samples in Table 2 (in particular, 190 phr vs. 130 phr) and Table 4, are provided in Table 5, below.

**Table 5**

| | Working Example 5 | Working Example 6 | Comparative Example D |
|---|---|---|---|
| **Components** | | | |
| OBC wt% | 22 | 21 | 24 |
| Oil (wt%) | 42 | 39 | 46 |
| Polyolefin (wt%) | 5 | 11 | 6 |
| Filler (wt%) | 22 | 21 | 24 |
| Acrylic Particles (wt%) | 9 | 8 | -- |
| **Properties** | | | |
| Hardness (Shore A, 10s) | 28 | 51 | 30 |
| Tack (N) @ 70°C, 7 days | 0.015 | 0.022 | 0.391 |
| Fingerprint @ 23°C, 7 days | 1 | 1 | 3 |
| Fingerprint @ 70°C, 7 days | 1 | 3 | 3 |

(continued)

| Properties | | | |
|---|---|---|---|
| Tensile Strength (psi) | 383 | 512 | 494 |
| Elongation-at-break (%) | 1440 | 1194 | 1519 |

In the above examples, tack and fingerprint are improved with the addition of the acrylic particles. Surprisingly for the addition of a polar additive to a non-polar polyolefin system, this is achieved without significant loss of other properties, such as compression set or tensile properties. Also, surprisingly as shown in Table 2, addition of only 10 wt% of an acrylic powder to the bulk of the compound results in an increase in the wet COF, which is important for wet grip. All examples are compounded on a Coperion ZSK-25 mm twin screw extruder and pelletized with a Gala LPU lab underwater pelleting system. Loss-in-weight feeders were used to meter the solids into the main feed throat of the extruder. Polymer pellets were dry blended and placed in Feeder #1. Powders were dry blended and placed in Feeder #2. Oil was injected into the barrel of the extruder at 2 separate injection points with a flow split of approximately 60/40 wt% between the 1st and 2nd injection points. Typical processing conditions are provided in Table 6.

**Table 6**

| Zone 1 Temp | °C | 50 - 120 |
|---|---|---|
| Zone 2 Temp | °C | 120 - 140 |
| Zone 3 Temp | °C | 140 - 160 |
| Zone 4 Temp | °C | 140 - 160 |
| Zone 5 Temp | °C | 140 - 160 |
| Zone 6 Temp | °C | 140 - 160 |
| Zone 7 Temp | °C | 140 - 160 |
| Die Temp | °C | 120 - 135 |
| Adaptor | °C | 110 - 200 |
| Pelletizer RPM | rpm | 1800 - 2500 |
| Die Pressure | Psig | 300 - 800 |
| Melt temp | °C | 190 - 210 |
| Extruder RPM | Rpm | 300 - 500 |
| Extruder Torque | % | 40 - 65 |
| Total Run Rate | lb/hr | 20 - 30 |

All examples are molded into 4" x 6" x 0.125" mirror polished plaques on a Krauss Maffei KM 110-390/390 CL Injection Molding Machine with an Axxicon mold under the typical conditions shown in Table 7, below.

**Table 7**

| Injection Molding Conditions | | |
|---|---|---|
| Temperatures | All Samples | |
| Hopper Zone | °C | 40 |
| Zone 1 Temp | °C | 121 |
| Zone 2 Temp | °C | 175 |
| Zone 3 Temp | °C | 204 |
| Zone 4 Temp | °C | 204 |
| Zone 5 Temp | °C | 204 |

(continued)

| Injection Molding Conditions | | |
|---|---|---|
| Temperatures | All Samples | |
| Nozzle Temp | °C | 185 - 200 |
| Mold Temp | °C | 18 |
| **Extruder** | | |
| RPM | rpm | 150 |
| Back Pressure | bar | 15 |
| Dosage Delay | sec | 3 |
| Dosage | cm$^3$ | 75 |
| Suckback | cm$^3$ | 5 |
| **Injection** | | |
| Injection Speed | cm$^3$/sec | 25 |
| Injection Pressure | bar | 2000 |
| Transfer Position | cm$^3$ | 15 - 20 |
| **Hold** | | |
| Pressure | bar | 200 - 225 |
| Hold Time | sec | 20 |
| Cool | | |
| Cool Time | sec | 20 |

It is specifically intended that the present disclosure not be limited to the embodiments and illustrations contained herein, but include modified forms of those embodiments including portions of the embodiments and combinations of elements of different embodiments as come within the scope of the following claims.

**Claims**

1.  An acrylic composition, comprising:

    a first component that accounts for 20 wt% to 40 wt% of the total weight of the acrylic composition, the first component including an olefin block copolymer comprising hard segments and soft segments, the soft segments having from 9 mol % to less than 15 mol % of comonomer content;
    a second component that accounts for at least 25 wt% of the total weight of the acrylic composition, the second component including at least one oil and at least one polyolefin; and
    a third component that accounts for at least 15 wt% of the total weight of the acrylic composition, the third component including acrylic particles having an average particle size from 0.5 μm to 30 μm and at least one inorganic filler, and the acrylic particles accounting for at least 10 wt% of the total weight of the third component.

2.  The composition of claim 1, wherein the acrylic composition includes from 20 wt % to 30 wt % of the olefin block copolymer, from 30 wt % to 50 wt % of the at least one oil, from 4 wt % to 20 wt % of the at least one polyolefin, from 20 wt % to 30 wt % of at least one filler, and from 4 wt % to 11 wt % of the acrylic particles, based on the total weight of the acrylic composition.

3.  The composition of claim 1 or claim 2, wherein the acrylic composition includes from 21 wt% to 27 wt % of at least one filler and from 5 wt % to 10 wt % of the acrylic particles, based on the total weight of the acrylic composition.

4.  The acrylic composition as claimed in any one of claims 1 to 3, wherein the olefin block copolymer comprises an ethylene/octene multi-block copolymer having from 5 wt% to 30 wt% hard segments and from 70 wt% to 95 wt% soft segments, based on the total weight of the olefin block copolymer.

5. The acrylic composition as claimed in any one of claims 1 to 4, wherein, after exposure to 70°C for one week, the acrylic composition has a tack force less than 0.1N and a Shore A hardness from 20 to 90.

6. The acrylic composition as claimed in any one of claims 1 to 5, wherein the polyolefin is a high density polyethylene having a density greater than 0.950 g/cc.

7. Pellets having an average particle diameter from 0.4 mm to 10.0 mm formed using the acrylic composition as claimed in any one of claims 1 to 6.

8. An article formed using the acrylic composition as claimed in any one of claims 1 to 6.

9. A molded article formed using the acrylic composition as claimed in any one of claims 1 to 6, wherein no fingerprints are visible after heat ageing at 70 °C for 7 days, according to the fingerprint test.

**Patentansprüche**

1. Eine Acrylzusammensetzung, die Folgendes beinhaltet:

   eine erste Komponente, die 20 Gew.-% bis 40 Gew.-% des Gesamtgewichts der Acrylzusammensetzung ausmacht, wobei die erste Komponente ein Olefinblockcopolymer umfasst, das harte Segmente und weiche Segmente beinhaltet, wobei die weichen Segmente einen Comonomergehalt von 9 Mol-% bis weniger als 15 Mol-% aufweisen;
   eine zweite Komponente, die mindestens 25 Gew.-% des Gesamtgewichts der Acrylzusammensetzung ausmacht, wobei die zweite Komponente mindestens ein Öl und mindestens ein Polyolefin umfasst; und
   eine dritte Komponente, die mindestens 15 Gew.-% des Gesamtgewichts der Acrylzusammensetzung ausmacht, wobei die dritte Komponente Acrylteilchen mit einer mittleren Teilchengröße von 0,5 $\mu$m bis 30 $\mu$m und mindestens einen anorganischen Füllstoff umfasst und die Acrylteilchen mindestens 10 Gew.-% des Gesamtgewichts der dritten Komponente ausmachen.

2. Zusammensetzung gemäß Anspruch 1, wobei die Acrylzusammensetzung bezogen auf das Gesamtgewicht der Acrylzusammensetzung zu 20 Gew.-% bis 30 Gew.-% das Olefinblockcopolymer, zu 30 Gew.-% bis 50 Gew.-% das mindestens eine Öl, zu 4 Gew.-% bis 20 Gew.-% das mindestens eine Polyolefin, zu 20 Gew.-% bis 30 Gew.-% mindestens einen Füllstoff und zu 4 Gew.-% bis 11 Gew.-% die Acrylteilchen umfasst.

3. Zusammensetzung gemäß Anspruch 1 oder Anspruch 2, wobei die Acrylzusammensetzung bezogen auf das Gesamtgewicht der Acrylzusammensetzung zu 21 Gew.-% bis 27 Gew.-% mindestens einen Füllstoff und zu 5 Gew.-% bis 10 Gew.-% die Acrylteilchen umfasst.

4. Acrylzusammensetzung gemäß einem der Ansprüche 1 bis 3, wobei das Olefinblockcopolymer bezogen auf das Gesamtgewicht des Olefinblockcopolymers ein Ethylen-Octen-Multiblockcopolymer mit 5 Gew.-% bis 30 Gew.-% harten Segmenten und 70 Gew.-% bis 95 Gew.-% weichen Segmenten beinhaltet.

5. Acrylzusammensetzung gemäß einem der Ansprüche 1 bis 4, wobei die Acrylzusammensetzung, nach Exposition gegenüber 70 °C für eine Woche, eine Tack-Kraft von weniger als 0,1 N und eine Shore-A-Härte von 20 bis 90 aufweist.

6. Acrylzusammensetzung gemäß einem der Ansprüche 1 bis 5, wobei das Polyolefin ein Polyethylen hoher Dichte mit einer Dichte von mehr als 0,950 g/cm$^3$ ist.

7. Pellets mit einem mittleren Teilchendurchmesser von 0,4 mm bis 10,0 mm, gebildet unter Verwendung der Acrylzusammensetzung gemäß einem der Ansprüche 1 bis 6.

8. Ein Artikel, gebildet unter Verwendung der Acrylzusammensetzung gemäß einem der Ansprüche 1 bis 6.

9. Ein Formartikel, gebildet unter Verwendung der Acrylzusammensetzung gemäß einem der Ansprüche 1 bis 6, wobei gemäß dem Fingerabdrucktest nach Wärmealterung bei 70 °C für 7 Tage keine Fingerabdrücke sichtbar sind.

**Revendications**

1. Une composition acrylique, comprenant :

   un premier constituant qui représente 20 % en poids à 40 % en poids du poids total de la composition acrylique, le premier constituant incluant un copolymère séquencé d'oléfines comprenant des segments durs et des segments mous, les segments mous ayant de 9 % en moles à moins de 15 % en moles de teneur en comonomère ;
   un deuxième constituant qui représente au moins 25 % en poids du poids total de la composition acrylique, le deuxième constituant incluant au moins une huile et au moins une polyoléfine ; et
   un troisième constituant qui représente au moins 15 % en poids du poids total de la composition acrylique, le troisième composant incluant des particules acryliques ayant une taille de particule moyenne de 0,5 μm à 30 μm et au moins une charge inorganique, et les particules acryliques représentant au moins 10 % en poids du poids total du troisième constituant.

2. La composition de la revendication 1, la composition acrylique incluant de 20 % en poids à 30 % en poids du copolymère séquencé d'oléfines, de 30 % en poids à 50 % en poids de l'au moins une huile, de 4 % en poids à 20 % en poids de l'au moins une polyoléfine, de 20 % en poids à 30 % en poids de l'au moins une charge, et de 4 % en poids à 11 % en poids des particules acryliques, rapporté au poids total de la composition acrylique.

3. La composition de la revendication 1 ou de la revendication 2, la composition acrylique incluant de 21 % en poids à 27 % en poids d'au moins une charge et de 5 % en poids à 10 % en poids des particules acryliques, rapporté au poids total de la composition acrylique.

4. La composition acrylique telle que revendiquée dans n'importe laquelle des revendications 1 à 3, dans laquelle le copolymère séquencé d'oléfines comprend un copolymère multiséquencé d'éthylène/octène ayant de 5 % en poids à 30 % en poids de segments durs et de 70 % en poids à 95 % en poids de segments mous, rapporté au poids total du copolymère séquencé d'oléfines.

5. La composition acrylique telle que revendiquée dans n'importe laquelle des revendications 1 à 4, la composition acrylique ayant, après exposition à 70 °C pendant une semaine, une force d'adhérence inférieure à 0,1 N et une dureté Shore A de 20 à 90.

6. La composition acrylique telle que revendiquée dans n'importe laquelle des revendications 1 à 5, dans laquelle la polyoléfine est un polyéthylène haute densité ayant une densité supérieure à 0,950 g/cm$^3$.

7. Granulés ayant un diamètre de particule moyen de 0,4 mm à 10,0 mm formés en utilisant la composition acrylique telle que revendiquée dans n'importe laquelle des revendications 1 à 6.

8. Un article formé en utilisant la composition acrylique telle que revendiquée dans n'importe laquelle des revendications 1 à 6.

9. Un article moulé formé en utilisant la composition acrylique telle que revendiquée dans n'importe laquelle des revendications 1 à 6, dans lequel aucune empreinte digitale n'est visible après vieillissement thermique à 70 °C pendant 7 jours, selon le test d'empreintes digitales.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011159649 A
- US 7608668 B
- WO 2005090427 A
- US 20060199930 A

**Non-patent literature cited in the description**

- **POTEMKIN.** *Physical Review E,* 1998, vol. 57 (6), 6902-6912
- **DOBRYNIN.** *J. Chem.Phvs.,* 1997, vol. 107 (21), 9234-9238